(19) Europäisches Patentamt
European Patent Office
Office européen des brevets

(11) **EP 4 201 703 B1**

(12) **EUROPEAN PATENT SPECIFICATION**

(45) Date of publication and mention
of the grant of the patent:
**01.01.2025 Bulletin 2025/01**

(21) Application number: **22208998.9**

(22) Date of filing: **23.11.2022**

(51) International Patent Classification (IPC):
***B60C 9/20*** *(2006.01)*       ***B60C 9/22*** *(2006.01)*

(52) Cooperative Patent Classification (CPC):
**B60C 9/2009;** B60C 9/22; B60C 2009/2016;
B60C 2009/2077; B60C 2009/2083; B60C 2009/209

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **23.12.2021 JP 2021209800**

(43) Date of publication of application:
**28.06.2023 Bulletin 2023/26**

(73) Proprietor: **Sumitomo Rubber Industries, Ltd.
Kobe-shi, Hyogo 651-0072 (JP)**

(72) Inventors:
• **MISAKI, Momoka
Kobe-shi (JP)**
• **MIAO, Dong
Kobe-shi (JP)**
• **ISHIDA, Shingo
Kobe-shi (JP)**
• **MIKI, Takashi
Kobe-shi (JP)**
• **SUZUKI, Masumi
Kobe-shi (JP)**

(74) Representative: **TBK
Bavariaring 4-6
80336 München (DE)**

(56) References cited:
**EP-A1- 0 795 426       EP-A1- 4 091 838
EP-A1- 4 108 474       EP-A1- 4 124 471
JP-A- 2015 080 972**

**Description**

BACKGROUND OF THE INVENTION

Field of the Invention

The present invention relates to a tire including a belt layer.

Background Art

To date, a tire in which a belt layer is provided inward of a tread portion in a tire radial direction, has been known. For example, JP 2019 177838 A proposes a tire in which a belt composed of two or more layers includes cords, and a gauge between the cords of two adjacent ones of the layers is specified so that both noise performance and low fuel consumption performance can be attained. However, regarding tires such as the tire disclosed in JP 2019-177838 A, which places importance on low fuel consumption performance, further enhancement of steering stability and durability has been desired in recent years as well, in association with improvement in vehicle performances and development of infrastructures such as expressways.

EP 4 091 838 A1, EP 4 108 474 A1 and EP 4 124 471 A1, which are comprised in the state of the art pursuant to Article 54(3) EPC, as well as EP 0 795 426 A1 and JP 2015 080972 A disclose a tire in which a belt layer includes a belt ply including belt cords each formed of a single steel wire. The tire disclosed in EP 0 795 426 A1 has the features specified in the preamble of claim 1.

SUMMARY OF THE INVENTION

The present invention has been made in view of the above situation, and a main object of the present invention is to provide a tire having improved steering stability and durability.

According to the present invention, the aforementioned object is achieved by a tire as specified in claim 1.

The tire of the present invention has the structure specified in claim 1, and thus can have improved steering stability and durability.

BRIEF DESCRIPTION OF THE DRAWINGS

FIG. 1 is a cross-sectional view of a tire according to one embodiment of the present invention; and
FIG. 2 is a cross-sectional view of a belt layer and a band layer according to the embodiment.

DETAILED DESCRIPTION

Hereinafter, one embodiment of the present invention will be described in detail with reference to the drawings.

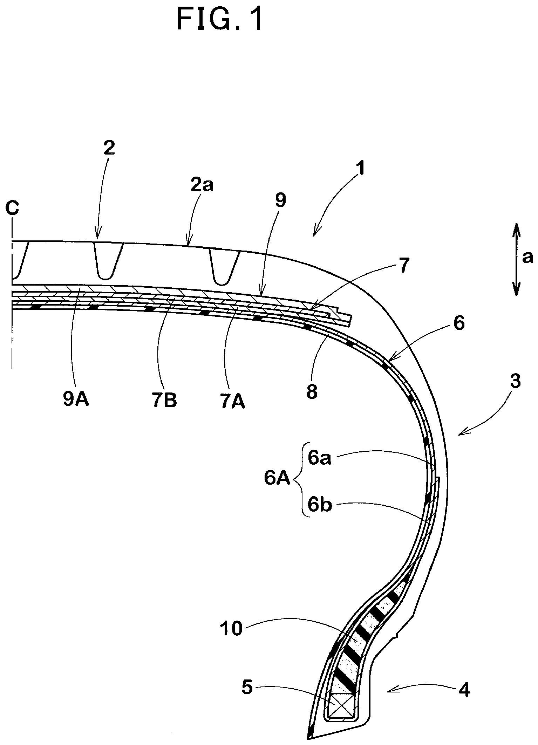

FIG. 1 is a tire meridian cross-sectional view including a rotation axis when a tire 1 of the embodiment is in a normal state. Here, if the tire 1 is a pneumatic tire, the "normal state" refers to a state where the tire 1 is fitted to a normal rim and adjusted to have a normal internal pressure, and no load is applied to the tire 1. Hereinafter, dimensions of parts of the tire 1 and the like are values measured in the normal state, unless otherwise noted.

If there is a standard system including a standard on which the tire 1 is based, the "normal rim" is a rim that is defined for each tire by the standard, and is, for example, the "standard rim" in the JATMA standard, the "Design Rim" in the TRA standard, or the "Measuring Rim" in the ETRTO standard. If there is no standard system including a standard on which the tire 1 is based, the "normal rim" is a rim having the smallest rim diameter and having the smallest rim width, among rims to which the tire 1 can be fitted and which do not cause air leakage.

If there is a standard system including a standard on which the tire 1 is based, the "normal internal pressure" is an air pressure that is defined, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. If there is no standard system including a standard on which the tire 1 is based, when the tire 1 is a tire for a passenger car, the "normal internal pressure" is 250 kPa.

The tire 1 of the embodiment is suitably used as a tire for a passenger car. Here, in the present description, the tire for a passenger car refers to a rubber pneumatic tire that is assumed to be mounted to a four-wheel-drive automobile and that has a normal load of 1000 kg or less.

The tire for a passenger car is not particularly limited as long as the normal load thereof is 1000 kg or less.

From the viewpoint of restraining excessive deformation in a tread portion 2, the normal load is preferably 900 kg, more preferably 750 kg, and further preferably 700 kg.

The "normal load" is a load that is defined, in a standard system including a standard on which the tire 1 is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

The tire 1 is not specified as a tire for a passenger car, and the present invention can be applied to, for example, a heavy duty tire, a tire for a motorcycle, a tire for racing, or the like. As the tire 1 including a belt layer 7 and a band layer 9 as described below, the present invention can be applied to various tires, such as a non-pneumatic tire the interior of which is not filled with pressurized air.

As shown in FIG. 1, the tire 1 of the embodiment includes the tread portion 2 annularly extending, a pair of sidewall portions 3 extending from both sides of the tread portion 2, and a pair of bead portions 4 extending so as to be connected to the sidewall portions 3.

The tire 1 of the embodiment also includes a toroidal carcass 6 extending on and between bead cores 5 of the pair of bead portions 4, and a belt layer 7 disposed outward of the carcass 6 in a tire radial direction a and inward of the tread portion 2 in the tire radial direction a. Desirably, the tire 1 further includes an inner liner 8 disposed inward of the carcass 6, and a band layer 9 disposed outward of the belt layer 7 in the tire radial direction a.

The tread portion 2 has, for example, an outer surface that forms a ground-contact surface 2a which comes into contact with a road surface during running. A profile of the ground-contact surface 2a in the normal state is, for example, a single circular arc or a combination of circular arcs, which have different curvatures, on a tire meridian cross-section.

The tread portion 2 desirably includes at least one elastomer layer. The tread portion 2 may, for example, be formed of two or more elastomer layers stacked in the tire radial direction a or have a plurality of elastomer layers arranged in a tire axial direction.

The elastomer layer of the tread portion 2 may be provided with, for example, circumferential grooves extending in a tire circumferential direction, lateral grooves extending in the tire axial direction, sipes having a groove width of 2 mm or less, and the like as appropriate. Examples of the circumferential grooves include a groove linearly extending and a groove extending in a zigzag manner.

For example, examples of a component of the elastomer layer of the tread portion 2 include: isoprene-based rubbers such as natural rubber and isoprene rubber; diene-based rubbers such as butadiene rubber, styrene-butadiene rubber, styrene-isoprene-butadiene rubber, chloroprene rubber, acrylonitrile-butadiene rubber, and isobutylene-isoprene rubber; and thermoplastic elastomers such as a styrene butadiene block copolymer and a styrene-isoprene-styrene copolymer. Among these, a diene-based rubber is suitably used for the elastomer layer of the tread portion 2.

Each sidewall portion 3 desirably includes at least one elastomer layer. For example, each sidewall portion 3 may be formed of two or more elastomer layers stacked in the tire axial direction or have a plurality of elastomer layers arranged in the tire radial direction a. The elastomer layer of the sidewall portion 3 may be formed from, for example, a component that is identical to or different from the component of the elastomer layer of the tread portion 2.

Regarding a boundary surface between the elastomer layer of the tread portion 2 and the elastomer layer of the sidewall portion 3, for example, the outer end side of the boundary surface in the tire axial direction is located on the outer side in the tire radial direction a than the inner end side of the boundary surface in the tire axial direction is. Regarding the boundary surface between the elastomer layer of the tread portion 2 and the elastomer layer of the sidewall portion 3, for example, the outer end side of the boundary surface in the tire axial direction may be located on the inner side in the tire radial direction a than the inner end side of the boundary surface in the tire axial direction is.

The carcass 6 includes at least one carcass ply. In the embodiment, the carcass 6 includes one carcass ply 6A. The carcass ply 6A is formed of, for example, an elastomer layer including carcass cords (not shown) each disposed at an angle of 75 to 90° relative to the tire circumferential direction. As each carcass cord, an organic fiber cord formed from, for example, aromatic polyamide (aramid), rayon, polyester, or the like can be used. Here, in the present description, the phrase "A to B" means being "not smaller than A and not larger than B".

The carcass ply 6A includes, for example, a body portion 6a extending from the tread portion 2 through the sidewall portions 3 to the bead cores 5 of the bead portions 4, and turned-up portions 6b contiguous with the body portion 6a and turned up around the bead cores 5 from the inner side to the outer side thereof in the tire axial direction. Each outer end of the turned-up portions 6b in the tire radial direction a may extend to, for example, the belt layer 7.

Between the body portion 6a and each turned-up portion 6b of the carcass ply 6A, for example, a bead apex 10 extending from the corresponding bead core 5 to the outer side in the tire radial direction a is disposed. The bead apex 10 is formed of, for example, an elastomer layer.

Each bead portion 4 may include, for example, a bead reinforcing layer (not shown) provided outward of the turned-up portion 6b of the carcass 6 in the tire axial direction. The bead reinforcing layer may be formed of, for example, an elastomer layer formed from a component that is identical to or different from a component of the elastomer layer of the bead apex 10.

Each bead portion 4 may include, for example, a chafer (not shown) provided outward of the turned-up portion 6b of the carcass 6 in the tire axial direction. In the case where the bead reinforcing layer and the chafer are provided, the chafer is desirably disposed outward of the bead reinforcing layer in the tire axial direction.

The inner liner 8 is desirably formed of an air-impermeable elastomer layer. Examples of a component of the elastomer layer of the inner liner 8 include isobutylene-isoprene rubber, and halogenated isobutylene-isoprene rubber. Such an inner liner 8 can retain the air pressure in the tire 1 for a long period.

The belt layer 7 includes at least one belt ply, and preferably two or more belt plies. In the embodiment, the belt layer 7 includes two belt plies 7A and 7B. The two belt plies 7A and 7B include, for example, a first belt ply 7A located on the inner side in the tire radial direction a and a second belt ply 7B located outward of the first belt ply 7A in the tire radial direction a. With such a belt layer 7, the rigidity of the tread portion 2 can be increased and the durability of the tire 1 can be improved.

The band layer 9 includes at least one band ply. In the embodiment, the band layer 9 includes one band ply 9A. Such a band layer 9 serves to attain both ride comfort and durability of the tire 1. This is because holding performance of the tread portion 2 is improved by using the band ply 9A, and thus it can be expected to reduce the deformation amount of the tread portion 2 and restrain heat generation.

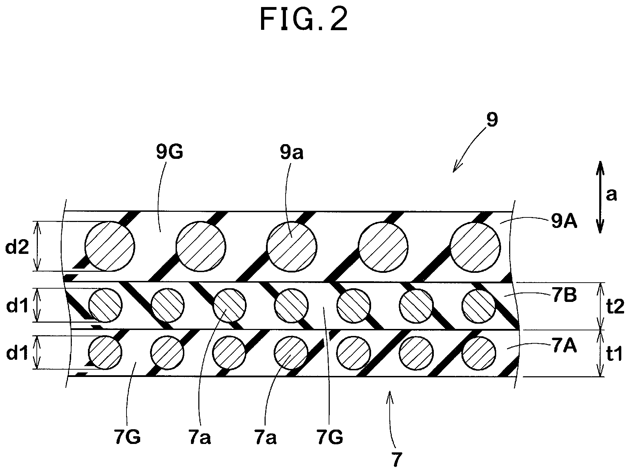

FIG. 2 is a cross-sectional view of the belt layer 7 and the band layer 9 of the embodiment. As shown in FIG. 2, the first belt ply 7A of the embodiment includes belt cords 7a each formed of a single steel wire. In addition, in the first belt ply 7A of the embodiment, a number N1 of belt cords that are arranged per ply width of 5 cm is 102 to 187, in a cross section orthogonal to the longitudinal direction of the belt cords 7a. Accordingly, the tire 1 of the embodiment can improve the steering stability and durability.

Here, the number N1 of belt cords that are arranged per ply width of 5 cm is an average number of belt cords 7a that are arranged per ply width of 5 cm in a range of $\pm 5.0$ cm centered at a tire equator C, in the cross section orthogonal to the longitudinal direction of the belt cords 7a.

The reason why the effects of the embodiment are obtained is considered as follows. However, the effects of the present embodiment are not bound by the following theory.

First, in the first belt ply 7A of the embodiment, since each belt cord 7a is formed of a non-twisted single cord, each belt cord 7a is less likely to be stretched as compared to a belt cord formed of a twisted wire. Since the tire 1 having such a belt layer 7 includes the belt cords 7a with high rigidity, great reaction force can be easily generated when lateral force is generated during cornering. Thus, the steering stability can be improved.

At the same time, in the first belt ply 7A of the embodiment, the number N1 of belt cords that are arranged is 102 to 187, that is, the belt cords are densely arranged, and thus the rigidity of the belt layer 7 in the tire axial direction can be improved. Accordingly, with the tire 1 of the embodiment, it is considered that generation of greater reaction force is facilitated and the steering stability can be further improved.

In addition, in the first belt ply 7A of the embodiment, when the number N1 of belt cords that are arranged is increased, force that acts in the tire radial direction a on the belt cords 7a during rolling can be reduced. Accordingly, with the first belt ply 7A of the embodiment, it is considered that compression deformation due to bending of the belt cords 7a can be restrained and the durability of the tire 1 can also be simultaneously improved.

From the viewpoint of densely arranging the belt cords 7a in an arrangement direction to increase the rigidity of the belt layer 7 in the tire axial direction, the number N1 of belt cords that are arranged in the first belt ply 7A is more preferably not smaller than 110 and further preferably not smaller than 115. The upper limit of the number N1 of belt cords that are arranged in the first belt ply 7A is not particularly limited, but more preferably not larger than 150 and further preferably not larger than 130. Such a first belt ply 7A serves to improve the steering stability and durability of the tire 1.

In the first belt ply 7A, a ratio R1 of cross-sectional areas of the belt cords 7a to a cross-sectional area of the first belt ply 7A is preferably not smaller than 0.05, in the cross section orthogonal to the longitudinal direction of the belt cords 7a. In the case where the ratio R1 of the cross-sectional areas is not smaller than 0.05, the rigidity of the belt cords 7a in the first belt ply 7A is easily increased. In addition, generation of reaction force between the first belt ply 7A and the second belt ply 7B adjacent to the first belt ply 7A is also facilitated. From such a viewpoint, the ratio R1 of the cross-sectional areas is more preferably not smaller than 0.10 and further preferably not smaller than 0.14.

The upper limit of the ratio R1 of the cross-sectional areas is not particularly limited, but preferably not larger than 0.30. In the case where the ratio R1 of the cross-sectional areas is not larger than 0.30, moderate deformation of the belt cords 7a in the first belt ply 7A is allowed. Thus, bending of the belt cords 7a during rolling can be restrained while generation of reaction force is facilitated. From such a viewpoint, the ratio R1 of the cross-sectional areas is more preferably not larger than 0.27 and further preferably not larger than 0.25.

The ratio R1 of the cross-sectional areas is calculated by, for example, the following formula (1).

$$R1 = s1 \times N1 \div (50 \times t1) \dots (1)$$

wherein s1 represents a cross-sectional area per belt cord 7a and t1 represents an average thickness of the first belt ply 7A. Similar to the number N1 of belt cords that are arranged, a thickness t1 of the first belt ply 7A is an average thickness in a range of ±5.0 cm centered at the tire equator C, in the cross section orthogonal to the longitudinal direction of the belt cords 7a.

The thickness t1 of the first belt ply 7A is preferably not larger than 0.80 mm. In the case where the thickness t1 of the first belt ply 7A is not larger than 0.80 mm, a road surface following property is improved, thereby serving to improve the steering stability and durability of the tire 1. From such a viewpoint, the thickness t1 of the first belt ply 7A is more preferably not larger than 0.75 mm.

The lower limit of the thickness t1 of the first belt ply 7A is not particularly limited, but preferably not smaller than 0.50 mm. In the case where the thickness t1 of the first belt ply 7A is not smaller than 0.50 mm, the rigidity of the tread portion 2 can be increased, thereby serving to improve the steering stability and durability of the tire 1. From such a viewpoint, the thickness t1 of the first belt ply 7A is more preferably not smaller than 0.55 mm.

The second belt ply 7B of the embodiment includes belt cords 7a each formed of a single steel wire. In the second belt ply 7B, a number N2 of belt cords that are arranged per ply width of 5 cm is preferably 102 to 187, in a cross section orthogonal to the longitudinal direction of the belt cords 7a. Such a second belt ply 7B has the belt cords 7a densely arranged in an arrangement direction, and thus the rigidity of the belt layer 7 in the tire axial direction can be increased, thereby improving the steering stability and durability of the tire 1.

From such a viewpoint, the number N2 of belt cords that are arranged in the second belt ply 7B is more preferably not smaller than 110 and further preferably not smaller than 115. The upper limit of the number N2 of belt cords that are arranged in the second belt ply 7B is not particularly limited, but more preferably not larger than 150 and further preferably not larger than 130.

Here, the number N2 of belt cords that are arranged per ply width of 5 cm is an average number of belt cords 7a per ply width of 5 cm in a range of ±5.0 cm centered at the tire equator C, in the cross section orthogonal to the longitudinal direction of the belt cords 7a.

In the second belt ply 7B, a ratio R2 of cross-sectional areas of the belt cords 7a to a cross-sectional area of the second belt ply 7B is preferably not smaller than 0.05, in the cross section orthogonal to the longitudinal direction of the belt cords 7a. In the case where the ratio R2 of the cross-sectional areas is not smaller than 0.05, the rigidity of the belt cords 7a in the second belt ply 7B is easily increased. In addition, generation of reaction force between the second belt ply 7B and the first belt ply 7A adjacent to the second belt ply 7B and reaction force between the second belt ply 7B and the band ply 9A adjacent to the second belt ply 7B is also facilitated. From such a viewpoint, the ratio R2 of the cross-sectional areas is more preferably not smaller than 0.10 and further preferably not smaller than 0.14.

The upper limit of the ratio R2 of the cross-sectional areas is not particularly limited, but preferably not larger than 0.30. In the case where the ratio R2 of the cross-sectional areas is not larger than 0.30, moderate deformation of the belt cords 7a in the second belt ply 7B is allowed. Thus, bending of the belt cords 7a during rolling can be restrained while generation of reaction force is facilitated. From such a viewpoint, the ratio R2 of the cross-sectional areas is more preferably not larger than 0.27 and further preferably not larger than 0.25.

The ratio R2 of the cross-sectional areas is calculated by, for example, the following formula (2).

$$R2 = s1 \times N2 \div (50 \times t2) \dots (2)$$

wherein s1 represents a cross-sectional area per belt cord 7a and t2 represents an average thickness of the second belt ply 7B. Similar to the number N2 of belt cords that are arranged, a thickness t2 of the second belt ply 7B is an average thickness in a range of ±5.0 cm centered at the tire equator C, in the cross section orthogonal to the longitudinal direction of the belt cords 7a.

The thickness t2 of the second belt ply 7B is preferably not larger than 0.80 mm. In the case where the thickness t2 of the second belt ply 7B is not larger than 0.80 mm, a road surface following property is improved, thereby serving to improve the steering stability and durability of the tire 1. From such a viewpoint, the thickness t2 of the second belt ply 7B is more preferably not larger than 0.75 mm.

The lower limit of the thickness t2 of the second belt ply 7B is not particularly limited, but preferably not smaller than 0.50 mm. In the case where the thickness t2 of the second belt ply 7B is not smaller than 0.50 mm, the rigidity of the tread portion 2 can be increased, thereby serving to improve the steering stability and durability of the tire 1. From such a viewpoint, the thickness t2 of the second belt ply 7B is more preferably not smaller than 0.55 mm.

The belt cord 7a of the second belt ply 7B is desirably the same as the belt cord 7a of the first belt ply 7A. In addition, the number N2 of belt cords that are arranged in the second belt ply 7B is desirably the same as the number N1 of belt cords that are arranged in the first belt ply 7A. Such a second belt ply 7B can be formed from the same ply as the ply from which the first belt ply 7A is formed, and thus the production cost can be reduced.

In this case, each of the average thickness of the first belt ply 7A and the average thickness of the second belt ply 7B may be obtained as a linear distance between the center of the belt cord 7a of the first belt ply 7A and the center of the belt cord 7a of the second belt ply 7B in the tire radial direction a.

A diameter d1 of each belt cord 7a is preferably not larger than 0.30 mm. In the case where the diameter d1 of the belt cord 7a is not larger than 0.30 mm, compression deformation can be diminished even if external force acts on the belt cords 7a, and damage can be restrained even if external force repeatedly acts on the belt cords 7a. Accordingly, the belt cords 7a of the embodiment can further improve the durability of the tire 1. From such a viewpoint, the diameter d1 of the belt cord 7a is more preferably not larger than 0.27 mm and further preferably not larger than 0.25 mm.

The diameter d1 of each belt cord 7a is preferably not smaller than 0.10 mm. In the case where the diameter d1 of the belt cord 7a is not smaller than 0.10 mm, a sufficient cross-sectional area can be ensured. Thus, generation of reaction force can be facilitated while buckling of the belt cord 7a is prevented. From such a viewpoint, the diameter d1 of the belt cord 7a is more preferably not smaller than 0.15 mm and further preferably not smaller than 0.18 mm.

Each belt cord 7a of the embodiment has a circular cross-section. With such belt cords 7a, the numbers N1 and N2 of belt cords that can be arranged can be increased. The belt cord 7a may have, for example, a flattened oval cross-section. In the case where the cross-section of the belt cord 7a is a flattened oval, among a minor axis and a major axis, one having a smaller angle relative to the tire radial direction a is desirably used as the diameter d1 of the belt cord 7a.

Strength TS (MPa) of each belt cord 7a satisfies the following formula (3).

$$-2000D+3650 \geq TS \geq -2000D+3250 \ldots (3)$$

wherein D represents the diameter d1 of the belt cord 7a. Such a belt cord 7a has flexibility, and thus breakage due to compression deformation is restrained, thereby improving the durability of the tire 1,

The strength TS of the belt cord 7a is a value that is obtained by dividing load at break when the belt cord 7a taken out from the tire 1 is deformed at a tensile speed of 50 mm/min by the cross-sectional area of the belt cord 7a of the tire 1 to which no load is applied, in compliance with a measurement method of "6.4 Load at break and Elongation at break" of JIS G3510: 1992.

Regarding the first belt ply 7A, a product d1 ×N1 of the diameter d1 (mm) of the belt cord 7a and the number N1 of belt cords that are arranged is preferably 15 to 30.

Regarding the second belt ply 7B as well, a product d1×N2 of the diameter d1 (mm) of the belt cord 7a and the number N2 of belt cords that are arranged is preferably 15 to 30.

With such a first belt ply 7A and a second belt ply 7B, an appropriate distance between two adjacent ones of the belt cords 7a can be kept while favorable rigidity in the width direction can be maintained. Accordingly, each belt cord 7a of the embodiment allows for flexure due to compression deformation, and great reaction force can be generated, thereby improving the steering stability of the tire 1.

Each of the first belt ply 7A and the second belt ply 7B of the embodiment includes an elastomer composition 7G coating each belt cord 7a. Each elastomer composition 7G of the first belt ply 7A and second belt ply 7B desirably has rubber elasticity.

Examples of the elastomer composition 7G include rubber compositions, and thermoplastic elastomer compositions. If the elastomer composition 7G is a rubber composition, examples of the rubber component thereof include isoprene-based rubbers, butadiene-based rubbers, styrene-butadiene rubbers, nitrile rubbers, and isobutylene-isoprene rubbers. If the elastomer composition 7G is a thermoplastic elastomer composition, examples of the elastomer thereof include block copolymers such as thermoplastic polyurethane, a styrene-butadiene block copolymer, and a styrene-ethylene-butylene-styrene block copolymer.

Each belt cord 7a is desirably plated or plated with three elements. Examples of the plating include one that involves use of, for example, zinc, copper, or the like. Examples of the plating with three elements include one that involves use of, for example, zinc, copper, cobalt, or the like. Such a belt cord 7a has a favorable adhesiveness to the elastomer composition 7G, and stress can be generated as a result of cooperation between the belt cord 7a and the elastomer composition 7G. Thus, the steering stability of the tire 1 can be improved.

In the first belt ply 7A of the embodiment, the belt cords 7a are each arranged so as to be tilted at an angle of 10 to 30° relative to the tire circumferential direction. In the second belt ply 7B, the belt cords 7a are each desirably arranged so as to be tilted in a direction opposite to the tilt direction of the belt cords 7a of the first belt ply 7A, at an angle of 10 to 30° relative to the tire circumferential direction.

Both the first belt ply 7A and the second belt ply 7B are desirably tilted in the same direction. Here, the angle of each belt cord 7a is an angle obtained when the tire 1 is in the normal state. The angle can be ascertained by, for example, partially peeling the tread portion 2. With such a belt layer 7, the rigidity of the tread portion 2 can be increased in a well-balanced manner, thereby improving the durability of the tire 1.

In the band ply 9A of the embodiment, band cords 9a each formed from an organic fiber are arranged at an angle of 5° or smaller relative to the tire circumferential direction. The band ply 9A desirably includes an elastomer composition 9G coating each band cord 9a. Similar to the elastomer compositions 7G of the first belt ply 7A and the second belt ply 7B, the elastomer composition 9G of the band ply 9A desirably has rubber elasticity. For example, examples of the elastomer composition 9G include the same compositions as those included in the examples of the elastomer composition 7G.

Examples of the organic fiber from which the band cords 9a are each formed include polyamide such as nylon 66, and polyester such as polyethylene terephthalate (PET). With such band cords 9a, a reduction in the weight can be achieved while favorable holding performance of the tread portion 2 can be maintained. Here, the band cords 9a may be each formed of, for example, a single steel wire.

A diameter d2 of each band cord 9a is preferably 0.35 to 0.70 mm. With such band cords 9a, the holding performance of the tread portion 2 is improved, and thus vibration during running can be restrained, thereby serving to improve the steering stability and durability of the tire 1.

In the band ply 9A, a number N3 of band cords that are arranged per ply width of 5 cm is preferably 35 to 65, in a cross section orthogonal to the longitudinal direction of the band cords 9a. Such a band ply 9A has appropriate rigidity and holding performance, thereby serving to improve the steering stability and durability of the tire 1.

Each band cord 9a of the embodiment has a circular cross-section. Such band cords 9a can be easily produced and managed, and thus the production cost can be reduced.

The band cord 9a may have, for example, a flattened oval cross-section. In the case where the cross-section of the band cord 9a is a flattened oval, among a minor axis and a major axis, one having a smaller angle relative to the tire radial direction a is desirably used as the diameter d2 of the band cord 9a.

EXAMPLES

Tires each having the basic structure shown in FIG. 1 were produced as samples on the basis of the specifications in Table 1. In a belt layer, a first belt ply and a second belt ply are formed from identical plies based on the specifications in Table 1. The steering stability and durability were tested by using the tires produced as samples. The specifications that are common to the test tires, and test methods, are as described below.

<Common Specifications>

Tire size: 225/55R18
Rim size: 18×13.0J
Air pressure: 180 kPa
Angle of belt cord of first belt ply relative to tire circumferential direction: 27°
Angle of belt cord of second belt ply relative to tire circumferential direction: -27°

<Steering Stability>

The tires produced as samples were mounted on all the wheels of a front-wheel-drive car made in Japan (an engine displacement of 2.0 L), and the steering stability when the car was caused to run on a test course having a paved road including meandering sections was evaluated on a 5-point scale with 5 being the maximum score through sensory evaluation by a test driver. The same test was conducted by 20 test drivers, and the total of scores by the test drivers was calculated. The results are represented as indexes with the total score of Comparative Example 1 being regarded as 100. A higher value indicates that the steering stability is better.

<Durability>

The tires produced as samples were each mounted to a drum tester, and in a state where a vertical load of 5.88 N was applied to the tires, the speed was gradually increased in steps of 10 km/h from 210 km/h, and the time and the speed until the tire became damaged were measured. The results are represented as indexes with the result of Comparative Example 1 being regarded as 100. A higher value indicates that the time until the tire becomes damaged is longer and that the durability is better.

The results of the tests are shown in Table 1.

[Table 1]

| | Comp. Ex. 1 | Comp. Ex. 2 | Comp. Ex. 3 | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|---|
| Belt cord structure | Twisted wire 1×2 | Single wire | Single wire | Single wire | Single wire | Single wire | Single wire | Single wire | Single wire | Single wire | Single wire | Single wire |
| Average thickness t1 of belt ply (mm) | 0.95 | 0.95 | 0.95 | 0.95 | 0.70 | 0.95 | 0.95 | 0.95 | 0.95 | 0.95 | 0.95 | 0.95 |
| Plating of belt cords | Two elements | Two elements | Two elements | Two elements | Two elements | Two elements | Two elements | Two elements | Two elements | Two elements | Two elements | Three elements |
| Diameter d1 of belt cord (mm) | 0.590 | 0.450 | 0.295 | 0.320 | 0.320 | 0.300 | 0.100 | 0.240 | 0.200 | 0.200 | 0.240 | 0.240 |
| Number N1 of belt cords arranged per ply width of 5 cm | 46 | 60 | 46 | 102 | 102 | 102 | 120 | 120 | 120 | 102 | 120 | 120 |
| Product d1×N1 | 27 | 27 | 14 | 33 | 33 | 31 | 12 | 29 | 24 | 20 | 29 | 29 |
| Ratio R1 of cross sectional areas | 0.26 | 0.20 | 0.07 | 0.17 | 0.23 | 0.15 | 0.02 | 0.11 | 0.08 | 0.07 | 0.11 | 0.11 |
| Strength TS of belt cord (MPa) | 2470 | 2750 | 2660 | 3010 | 3010 | 3050 | 3450 | 3170 | 3250 | 3250 | 2770 | 2770 |
| Steering stability (index) | 100 | 110 | 60 | 110 | 116 | 112 | 108 | 120 | 122 | 118 | 120 | 124 |
| Durability (index) | 100 | 85 | 75 | 100 | 104 | 102 | 102 | 112 | 108 | 110 | 115 | 120 |
| Combined performance (total) | 200 | 195 | 135 | 210 | 220 | 214 | 210 | 232 | 230 | 228 | 235 | 244 |

As a result of the tests, it has been confirmed that each of the tires in the examples has more excellent steering stability and durability than the tires in the comparative examples, and the combined performance thereof determined according to the total value of the performances is also more favorable than those of the tires in the comparative examples, so that both steering stability and durability are improved.

REFERENCE SIGNS LIST

1. Tire
2. Tread portion
3. Sidewall portions
4. Bead portions
5. Bead cores
6. Carcass
7. Belt layer
7A. First belt ply
7B. Second belt ply
7a. Belt cords
8. Inner liner
9. Band layer
9A. Band ply
9a. Band cords
a. Tire radial direction
d1. Diameter of belt cords
d2. Diameter of belt cords
t1. Thickness of the first belt ply
t2. Thickness of the second belt ply

**Claims**

1. A tire (1) comprising a belt layer (7), wherein

   the belt layer (7) includes a first belt ply (7A),
   the first belt ply (7A) includes belt cords (7a) each formed of a single steel wire, and
   a number (N1) of belt cords (7a) that are arranged per ply width of 5 cm in the first belt ply (7A) is 102 to 187, in a cross section orthogonal to a longitudinal direction of the belt cords (7a),
   **characterized in that**
   strength TS (MPa) of each belt cord (7a) satisfies the following formula (3):

$$-2000D+3650 \geq TS \geq -2000D+3250 \ ... \ (3)$$

   wherein D represents the diameter (d1) of the belt cord (7a).

2. The tire (1) according to claim 1, wherein the number (N1) of belt cords (7a) that are arranged per ply width of 5 cm in the first belt ply (7A) is not smaller than 110, in the cross section orthogonal to the longitudinal direction of the belt cords (7a).

3. The tire (1) according to claim 1 or 2, wherein a diameter (d1) of each belt cord (7a) is not larger than 0.30 mm.

4. The tire (1) according to any one of claims 1 to 3, wherein a product of the diameter (d1) (mm) of the belt cord (7a) and the number (N1) of belt cords (7a) that are arranged in the first belt ply (7A) is 15 to 30.

5. The tire (1) according to any one of claims 1 to 4, wherein the belt cords (7a) are each arranged in the first belt ply (7A) so as to be tilted at an angle of 10 to 30° relative to a tire circumferential direction.

**6.** The tire (1) according to any one of claims 1 to 5, wherein a ratio (R1) of cross-sectional areas of the belt cords (7a) to a cross-sectional area of the first belt ply (7A) is not smaller than 0.05, in the cross section orthogonal to the longitudinal direction of the belt cords (7a).

**7.** The tire (1) according to any one of claims 1 to 6, wherein a thickness (t1) of the first belt ply (7A) is not larger than 0.80 mm.

**8.** The tire (1) according to any one of claims 1 to 7, further comprising a band layer (9) disposed outward of the belt layer (7) in a tire radial direction (a), wherein

the band layer (9) includes at least one band ply (9A), and
band cords (9a) each formed from an organic fiber are arranged in the band ply (9A) at an angle of 5° or smaller relative to the tire circumferential direction.

**Patentansprüche**

**1.** Reifen (1) mit einer Gürtelschicht (7), wobei

die Gürtelschicht (7) eine erste Gürtellage (7A) aufweist,
die erste Gürtellage (7A) Gürtelkorden (7a) aufweist, die jeweils aus einem einzelnen Stahldraht ausgebildet sind, und
in einem Querschnitt orthogonal zu einer Längsrichtung der Gürtelkorden (7a) eine Anzahl (N1) an Gürtelkorden (7a), die in der ersten Gürtellage (7A) pro 5 cm Lagenbreite angeordnet sind, 102 bis 187 beträgt,
**dadurch gekennzeichnet, dass**
die Festigkeit TS (MPa) jeder Gürtelkorde (7a) die folgende Formel (3) erfüllt:

$$-2000D+3650 \geq TS \geq -2000D+3250 \ ... \ (3)$$

wobei D für den Durchmesser (d1) der Gürtelkorde (7a) steht.

**2.** Reifen (1) nach Anspruch 1, wobei in dem Querschnitt orthogonal zur Längsrichtung der Gürtelkorden (7a) die Anzahl (N1) an Gürtelkorden (7a), die in der ersten Gürtellage (7A) pro 5 cm Lagenbreite angeordnet sind, nicht weniger als 110 beträgt.

**3.** Reifen (1) nach Anspruch 1 oder 2, wobei ein Durchmesser (d1) jeder Gürtelkorde (7a) nicht mehr als 0,30 mm beträgt.

**4.** Reifen nach einem der Ansprüche 1 bis 3, wobei ein Produkt des Durchmessers (d1) (mm) der Gürtelkorde (7a) und der Anzahl (N1) an Gürtelkorden (7a), die in der ersten Gürtellage (7A) angeordnet sind, 15 bis 30 beträgt.

**5.** Reifen (1) nach einem der Ansprüche 1 bis 4, wobei die Gürtelkorden (7a) in der ersten Gürtellage (7A) jeweils so angeordnet sind, dass sie in einem Winkel von 10 bis 30° relativ zu einer Reifenumfangsrichtung geneigt sind.

**6.** Reifen (1) nach einem der Ansprüche 1 bis 5, wobei in dem Querschnitt orthogonal zur Längsrichtung der Gürtelkorden (7a) ein Verhältnis (R1) von Querschnittsflächen der Gürtelkorden (7a) zu einer Querschnittsfläche der ersten Gürtellage (7A) nicht weniger als 0,05 beträgt.

**7.** Reifen (1) nach einem der Ansprüche 1 bis 6, wobei eine Dicke (t1) der ersten Gürtellage (7A) nicht mehr als 0,80 mm beträgt.

**8.** Reifen (1) nach einem der Ansprüche 1 bis 7, der außerdem eine Bandagenschicht (9) umfasst, die in einer Reifenradialrichtung (a) außerhalb der Gürtelschicht (7) angeordnet ist, wobei

die Bandagenschicht (9) mindestens eine Bandagenlage (9A) aufweist und
in der Bandagenlage (9A) jeweils aus einer organischen Faser ausgebildete Bandagenkorden (9a) in einem Winkel von 5° oder weniger relativ zur Reifenumfangsrichtung angeordnet sind.

**Revendications**

1.  Pneumatique (1) comprenant une couche de ceinture (7),

    la couche de ceinture (7) comprenant un premier pli de ceinture (7A),
    le premier pli de ceinture (7A) comprenant des câbles de ceinture (7a) formés chacun d'un seul fil d'acier, et
    un nombre (N1) de câbles de ceinture (7a) qui sont agencés par largeur de pli de 5 cm dans le premier pli de
    ceinture (7A) étant compris entre 102 et 187, dans une section transversale orthogonale à une direction longitudinale des câbles de ceinture (7a),
    **caractérisé en ce que**
    la résistance TS (MPa) de chaque câble de ceinture (7a) répond à la formule suivante (3) :

    $$-2000D+3650 \geq TS \geq -2000D+3250 \ ... \ (3)$$

    D représentant le diamètre (d1) du câble de ceinture (7a).

2.  Pneumatique (1) selon la revendication 1, le nombre (N1) de câbles de ceinture (7a) qui sont agencés par largeur
    de pli de 5 cm dans le premier pli de ceinture (7A) n'étant pas inférieur à 110, dans la section transversale orthogonale
    à la direction longitudinale des câbles de ceinture (7a).

3.  Pneumatique (1) selon la revendication 1 ou 2, un diamètre (d1) de chaque câble de ceinture (7a) n'étant pas
    supérieur à 0,30 mm.

4.  Pneumatique (1) selon l'une quelconque des revendications 1 à 3, un produit du diamètre (d1) (mm) du câble de
    ceinture (7a) et du nombre (N1) de câbles de ceinture (7a) qui sont agencés dans le premier pli de ceinture (7A)
    étant compris entre 15 et 30.

5.  Pneumatique (1) selon l'une quelconque des revendications 1 à 4, les câbles de ceinture (7a) étant chacun agencés
    dans le premier pli de ceinture (7A) de manière à être inclinés selon un angle de 10 à 30° par rapport à une direction
    circonférentielle du pneumatique.

6.  Pneumatique (1) selon l'une quelconque des revendications 1 à 5, un rapport (R1) des surfaces de section transversale des câbles de ceinture (7a) sur une surface de section transversale du premier pli de ceinture (7A) n'étant
    pas inférieur à 0,05, dans la section transversale orthogonale à la direction longitudinale des câbles de ceinture (7a).

7.  Pneumatique (1) selon l'une quelconque des revendications 1 à 6, une épaisseur (t1) du premier pli de ceinture
    (7A) n'étant pas supérieure à 0,80 mm.

8.  Pneumatique (1) selon l'une quelconque des revendications 1 à 7, comprenant en outre une couche de bande (9)
    disposée à l'extérieur de la couche de ceinture (7) dans une direction radiale du pneumatique (a),

    la couche de ceinture (9) comprenant au moins un pli de bande (9A), et
    des câbles de bande (9a) formés chacun d'une fibre organique étant agencés dans le pli de bande (9A) selon
    un angle de 5° ou moins par rapport à la direction circonférentielle du pneumatique.

# FIG. 1

# FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019177838 A
- EP 4091838 A1
- EP 4108474 A1

- EP 4124471 A1
- EP 0795426 A1
- JP 2015080972 A